# EUROPEAN PATENT SPECIFICATION

(11) **EP 3 136 593 B1**
(45) Date of publication and mention of the grant of the patent: **16.12.2020**
(21) Application number: 16185796.6
(22) Date of filing: 26.08.2016
(51) Int. Cl.: H02S 40/34

(54) **PHOTOVOLTAIC JUNCTION BOX**
PHOTOVOLTAIKANSCHLUSSKASTEN
BOITE DE RACCORDEMENT PHOTOVOLTAÏQUE

(30) Priority: 26.08.2015 CN 201520650408 U
(43) Date of publication of application: 01.03.2017
(73) Proprietor: Tyco Electronics (Shanghai) Co. Ltd., Shanghai (CN)
(72) Inventor: ZHONG, Yuan, Gumei Road,, Shanghai (CN); XU, Xiang, Gumei Road,, Shanghai (CN); LV, Wenbo, Gumei Road,, Shanghai (CN); LI, Cui, Gumei Road,, Shanghai (CN)
(74) Representative: Grünecker Patent- und Rechtsanwälte PartG mbB

(56) References cited:
- EP-A1- 2 752 473
- EP-B1- 2 332 399
- US-A1- 2010 182 761
- US-A1- 2010 263 714

## Description

### BACKGROUND OF THE INVENTION

### Field of the Invention

The present disclosure relates to a photovoltaic junction box to be mounted on a solar panel.

### Description of the Related Art

Solar panel (or solar cell panel) is generally adapted to collect solar energy and transform the collected solar energy to electrical energy. The current generated by each solar panel is quite weak, and a plurality of solar panels should be connected together by the photovoltaic junction boxes, such that the current generated by the plurality of solar panels is converged and then is output together.

The photovoltaic junction box mainly comprises a base and a cover mounted on the base. Electronic elements, such as conduction terminals and diodes, are received in a receiving chamber of the base. In the prior art, the base and the cover are engaged with each other hermetically without any gap therebetween, such that the internal space of the photovoltaic junction box is insulated from the external space. In the prior art, since the base is hermetically engaged with the cover, the heat produced by diodes in operation inside the photovoltaic junction box may be limited in the photovoltaic junction box and quite hard to be discharged to the external atmosphere, such that the temperature in the photovoltaic junction box goes up and in turn the service life of the diodes is adversely affected and the photoelectric conversion efficiency is lowered.

Photovoltaic junction boxes are for instance known from US 2010/0182761 A1, EP 2 332 399 B1 and US 2010/0263714 A1. All of these photovoltaic junction boxes are composed of a box body having an opening which is closed by a cover that either seals the opening or provides air holes located all over the an inner cover, which is provided additionally to the cover.

### SUMMARY OF THE INVENTION

The object of the present disclosure is to solve the above mentioned technical problems or other technical problems of the prior art.

One object of the present disclosure is to provide a photovoltaic junction box, which may rapidly dissipate the heat generated by diodes to external atmosphere so as to reduce the temperature of the photovoltaic junction box, prolong the service life of the diode and improve the photoelectric conversion efficiency.

According to one aspect of the present disclosure, there is provided a photovoltaic junction box, according to claim 1 comprising: a base having a receiving chamber for receiving electronic elements therein; and a cover configured to be provided on the base so as to open and close an opening of the receiving chamber of the base. A plurality of ventilation holes are formed between a peripheral edge of the cover and a peripheral edge of the opening of the receiving chamber of the base, so that the receiving chamber of the base is communicated with external atmosphere via the ventilation holes.

According to an exemplary embodiment of the present disclosure, the ventilation holes are formed on the peripheral edge of the cover and/or on the peripheral edge of the opening of the receiving chamber of the base.

According to another exemplary embodiment of the present disclosure, the ventilation holes are only formed on the peripheral edge of the cover.

According to another exemplary embodiment of the present disclosure, the electronic elements comprise conduction terminals received in the receiving chamber of the base, and the diodes connected between two adjacent conduction terminals.

According to another exemplary embodiment of the present disclosure, the diodes are soldered on the conduction terminals by means of Surface Mount Technology.

According to another exemplary embodiment of the present disclosure, the electronic elements are sealed by a pouring sealant, which is poured into the receiving chamber and distant from the cover by a predetermined distance so as to allow the air to flow in the receiving chamber.

According to another exemplary embodiment of the present disclosure, the cover is mounted to the base by means of snap-fitting.

According to another exemplary embodiment of the present disclosure, the cover is formed with elastic pins, and the base is formed with slots which are adapted to be engaged with the pins by means of snap-fitting.

In the various exemplary embodiments of the present disclosure, since the ventilation holes are formed between a peripheral edge of the cover and a peripheral edge of the opening of the receiving chamber of the base, the receiving chamber inside the photovoltaic junction box is communicated with external atmosphere via the ventilation holes. Cold air may enter into the photovoltaic junction box via the ventilation holes, and hot air inside the photovoltaic junction box may be quickly discharged to the outside via the ventilation holes. In this way, the air may be circulated in a manner of convection in the photovoltaic junction box through the ventilation holes, and the heat generated by the diodes in operation may be quickly brought out of the photovoltaic junction box, thereby reducing the temperature of photovoltaic junction box, prolonging the service life of the diodes, and improving the photoelectric conversion efficiency.

### BRIEF DESCRIPTION OF THE DRAWINGS

The above and other features of the present disclosure will become more apparent by describing in detail exemplary embodiments thereof with reference to the accompanying drawings, in which:
Fig.1 shows a schematic perspective view of a photovoltaic junction box according to an exemplary embodiment of the present disclosure;
Fig. 2 shows a plan view of the photovoltaic junction box as shown in Fig.1;
Fig. 3 shows a locally enlarged schematic view of the photovoltaic junction box as shown in Fig.1;
Fig. 4 shows a schematic perspective view of a base of the photovoltaic junction box as shown in Fig.1;
Fig.5 shows a schematic perspective view of a cover of the photovoltaic junction box as shown in Fig.1; and
Fig.6 shows a cross-section view of the photovoltaic junction box as shown in Fig.1.

### DETAILED DESCRIPTION OF PREFERRED EMBODIMENTS OF THE IVENTION

Technical solutions of the present disclosure will be described hereinafter in detail with reference to the attached drawings and in combination with the embodiments, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

Furthermore, in the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general technical concept of the invention, there is provided a photovoltaic junction box comprising: a base having a receiving chamber for receiving electronic elements therein; and a cover provided on the base so as to open and close an opening of the receiving chamber of the base. A plurality of ventilation holes are formed between a peripheral edge of the cover and a peripheral edge of the opening of the receiving chamber of the base, so that the receiving chamber of the base is communicated with external atmosphere via the ventilation holes.

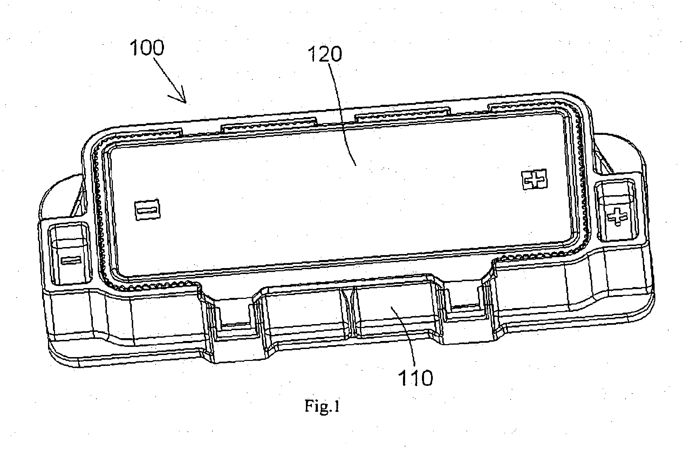

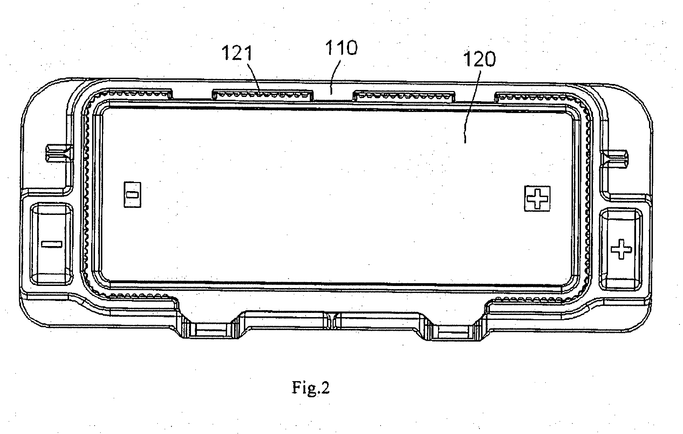

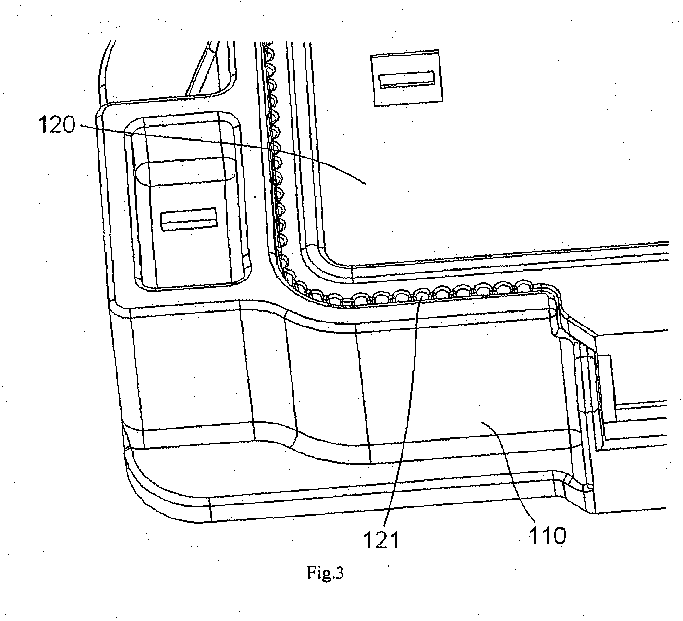

Fig.1 shows a schematic perspective view of a photovoltaic junction box 100 according to an exemplary embodiment of the present disclosure; Fig. 2 shows a plan view of the photovoltaic junction box 100 as shown in Fig.1; and Fig. 3 shows a locally enlarged schematic view of the photovoltaic junction box as shown in Fig.1.

In an exemplary embodiment of the present disclosure, there is disclosed a photovoltaic junction box. As shown in Figs. 1-3, the photovoltaic junction box mainly comprises a base 110 and a cover 120. The base has a receiving chamber for receiving electronic elements 111 and 112. The cover 120 is provided on the base 110 and adapted to open and close an opening of the receiving chamber of the base 110.

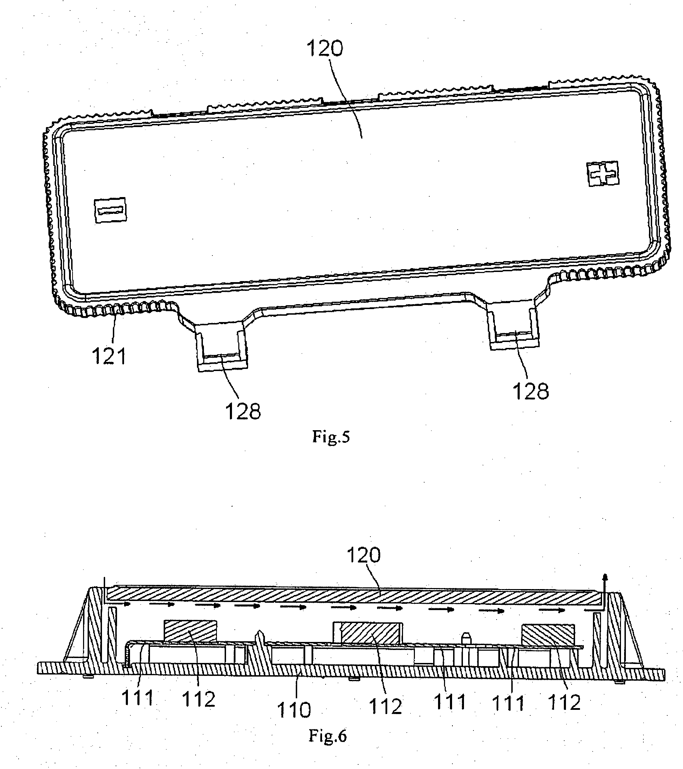

As shown in Figs. 1-3, in an exemplary embodiment of the present disclosure, a plurality of ventilation holes 121 are formed between a peripheral edge of the cover120 and a peripheral edge of the opening of the receiving chamber of the base 110, so that the receiving chamber of the base 110 is communicated with external atmosphere via the ventilation holes 121. In this way, as shown in Figs. 3 and 6, external cold air may enter into the photovoltaic junction box via the ventilation holes 121, and hot air inside the photovoltaic junction box may be discharged to the outside rapidly via the ventilation holes 121. In this way, as illustrated by the arrows in Fig.6, the air may be circulated in a manner of convection in the photovoltaic junction box 100 through the ventilation holes 121, and the heat generated by the diodes in operation may be quickly brought out of the photovoltaic junction box, thereby reducing the temperature of photovoltaic junction box, prolonging the service life of the diodes, and improving the photoelectric conversion efficiency

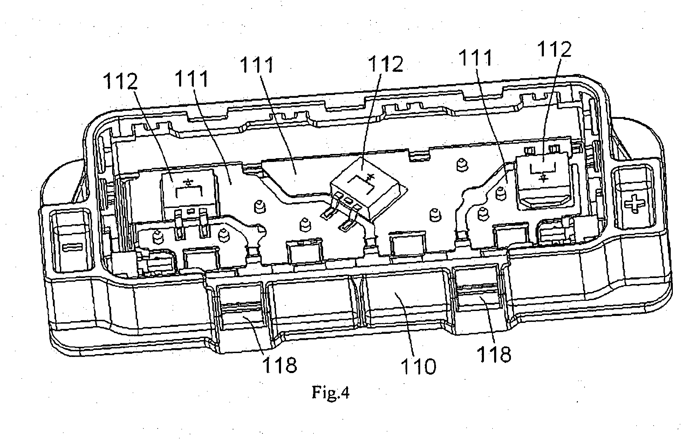

Fig. 4 shows a schematic perspective view of the base110 of the photovoltaic junction box 100 as shown in Fig.1; and Fig.5 shows a schematic perspective view of the cover 120 of the photovoltaic junction box 100 as shown in Fig.1.

In an embodiment of the present disclosure, a plurality of ventilation holes 121 may be formed on the peripheral edge of the cover120 and/or the peripheral edge of the opening of the receiving chamber of the base 110.

For the sake of easy production, in the illustrated embodiment, as shown in Figs. 4 and 5, the ventilation holes 121 are only formed on the peripheral edge of the cover120. In the illustrated embodiment, the ventilation holes 121 are formed as semicircle-shaped holes.

As shown in Figs. 4 and 6, in the illustrated embodiment, the previous electronic elements 111 and 112 comprise conduction terminals 111 received in the receiving chamber of the base 110, and the diodes 112 connected between two adjacent conduction terminals 111.

In an embodiment of the present disclosure, as shown in Fig.4, the diodes 112 are adapted to be soldered on the conduction terminals 111 by means of Surface Mount Technology (SMT).

As shown in Fig. 6, in an exemplary embodiment of the present disclosure, the electronic elements 111 and 112 are sealed by a pouring sealant, which is poured into the receiving chamber and distant from the cover 120 by a predetermined distance so as to allow the air to flow in the receiving chamber.

As shown in Figs. 1, 4 and 5, in an exemplary embodiment of the present disclosure, the cover 120 is mounted to the base 100 by means of snap-fitting.

In the illustrated embodiment, as shown in Figs. 1, 4 and 5, the cover 120 is formed with elastic pins 128, and the base 110 is formed with slots 118. The pins 128 are adapted to be engaged with slots 118 by means of snap-fitting.

Although the present disclosure has been described with reference to the attached drawings, the embodiments disclosed in the attached drawings are intended to describe the preferred embodiments of the present disclosure exemplarily, but should not be construed as a limitation to the present disclosure.

Although several embodiments of the general concept of the present disclosure have been shown and described, it would be appreciated by those skilled in the art that various changes or modifications may be made in these embodiments without departing from the principles of the disclosure, the scope of which is defined in the claims.

As used herein, term "comprising" or "having" should be understood as not excluding other elements or steps, and term "a" or "an" should be understood as not excluding plural elements or steps. In addition, any reference numeral in claims should not be understood as the limitation of the scope of the present disclosure.

## Claims

1. A photovoltaic junction box (100), comprising:
a base (110) having a receiving chamber for receiving electronic elements (111, 112) therein; and
a cover (120) configured to be provided on the base (110) so as to open and close an opening of the receiving chamber of the base (110),
wherein a plurality of ventilation holes (121) are formed between a peripheral edge of the cover (120) and a peripheral edge of the opening of the receiving chamber of the base (110), so that the receiving chamber of the base (110) is communicated with external atmosphere via the ventilation holes (121).

2. The junction box (100) according to claim 1, wherein
the ventilation holes (121) are formed on the peripheral edge of the cover (120) and/or on the peripheral edge of the opening of the receiving chamber of the base (110).

3. The junction box (100) according to claim 1, wherein
the ventilation holes (121) are only formed on the peripheral edge of the cover (120).

4. The junction box (100) according to claim 1, wherein the electronic elements (111, 112) comprise conduction terminals received in the receiving chamber of the base (110), and the diodes connected between two adjacent conduction terminals.

5. The junction box (100) according to claim 4, wherein
the diodes are soldered on the conduction terminals by means of Surface Mount Technology.

6. The junction box (100) according to claim 1, wherein
the electronic elements (111, 112) are sealed by a pouring sealant, which is poured into the receiving chamber and distant from the cover (120) by a predetermined distance so as to allow the air to flow in the receiving chamber.

7. The junction box (100) according to claim 1, wherein
the cover (120) is mounted to the base (110) by means of snap-fitting.

8. The junction box (100) according to claim 7, wherein
the cover (120) is formed with elastic pins, and the base (110) is formed with slots which are adapted to be engaged with the pins by means of snap-fitting.

## Patentansprüche

1. Photovoltaik-Anschlusskasten (100), der umfasst:
einen Sockel (110) mit einer Aufnahmekammer zum Aufnehmen elektronischer Elemente (111, 112) darin; sowie
eine Abdeckung (120), die an dem Sockel (110) zum Öffnen und Schließen einer Öffnung der Aufnahmekammer des Sockels (110) vorhanden ist,
wobei eine Vielzahl von Lüftungslöchern (121) zwischen einem Umfangsrand der Abdeckung (120) und einem Umfangsrand der Öffnung der Aufnahmekammer des Sockels (110) so ausgebildet sind, dass die Aufnahmekammer des Sockels (110) über die Lüftungslöcher (121) mit der Außenumgebung in Verbindung steht.

2. Anschlusskasten (100) nach Anspruch 1, wobei
die Lüftungslöcher (121) an dem Umfangsrand der Abdeckung (120) und/oder an dem Umfangsrand der Öffnung der Aufnahmekammer des Sockels (110) ausgebildet sind.

3. Anschlusskasten (100) nach Anspruch 1, wobei
die Lüftungslöcher (121) nur an dem Umfangsrand der Abdeckung (120) ausgebildet sind.

4. Anschlussdose (100) nach Anspruch 1, wobei die elektronischen Elemente (111, 112) leitende Anschlüsse, die in der Aufnahmekammer des Sockels (110) aufgenommen sind, und die Dioden umfassen, die zwischen zwei benachbarte leitende Anschlüsse geschaltet sind.

5. Anschlusskasten (100) nach Anspruch 4, wobei
die Dioden mittels Oberflächenmontagetechnik an die leitenden Anschlüsse angelötet sind.

6. Anschlusskasten (100) nach Anspruch 1, wobei
die elektronischen Elemente (111, 112) mittels einer Vergussmasse abgedichtet werden, die in die Aufnahmekammer gegossen wird und von der Abdeckung (120) um einen vorgegebenen Abstand entfernt ist, so dass die Luft in die Aufnahmekammer strömen kann.

7. Anschlusskasten (100) nach Anspruch 1, wobei
die Abdeckung (120) mittels Einrasten an dem Sockel (110) angebracht wird.

8. Anschlusskasten (100) nach Anspruch 7, wobei
die Abdeckung (120) mit elastischen Stiften versehen ist und der Sockel (110) mit Schlitzen versehen ist, die so eingerichtet sind, dass sie mittels Einrasten mit den Stiften in Eingriff gebracht werden.

## Revendications

1. Boîtier de raccordement photovoltaïque (100) comprenant :
une base (110) comportant un compartiment de réception destiné à accueillir des éléments électrode (111, 112), et
un couvercle (120) configuré pour être disposé sur la base (110) de sorte à ouvrir et fermer une ouverture du compartiment de réception de la base (110),
dans lequel une pluralité de trous de ventilation (121) sont formés entre la bordure périphérique du couvercle (120) et la bordure périphérique de l'ouverture du compartiment de réception de la base (110) de sorte à ce que le compartiment de réception de la base (110) soit mis en communication avec l'atmosphère extérieure par l'intermédiaire des trous de ventilation (121).

2. Boîtier de raccordement (100) selon la revendication 1, dans lequel :
les trous de ventilation (121) sont formés sur la bordure périphérique du couvercle (120) et/ou sur la bordure périphérique de l'ouverture du compartiment de réception de la base (110).

3. Boîtier de raccordement (100) selon la revendication 1, dans lequel :
les trous de ventilation (121) sont seulement formés sur la bordure périphérique du couvercle (120).

4. Boîtier de raccordement (100) selon la revendication 1, dans lequel les éléments électroniques (111, 112) comprennent des bornes de conduction reçues dans le compartiment de réception de la base (110) ainsi que les diodes reliées entre deux bornes de conduction adjacentes.

5. Boîtier de raccordement (100) selon la revendication 4, dans lequel :
les diodes sont soudées sur les bornes de conduction au moyen d'une technologie de montage en surface.

6. Boîtier de raccordement (100) selon la revendication 1, dans lequel :
les éléments électroniques (111, 112) sont rendus étanches par l'agent d'étanchéité coulé qui est versé dans le compartiment de réception et sont éloignés du couvercle (120) d'une distance prédéterminée de sorte à autoriser la circulation de l'air dans le compartiment de réception.

7. Boîtier de raccordement (100) selon la revendication 1, dans lequel :
le couvercle (120) est monté sur la base (110) au moyen d'un emboîtement par pression.

8. Boîtier de raccordement (100) selon la revendication 7, dans lequel :
le couvercle (120) est doté de broches élastiques, et la base (110) est dotée de gorges qui sont conçues pour se mettre en prise avec les broches au moyen d'un emboîtement par pression.
